# EUROPÄISCHE PATENTSCHRIFT

(11) **EP 0 779 183 B1**
(45) Veröffentlichungstag und Bekanntmachung des Hinweises auf die Patenterteilung: **12.07.2000**
(21) Anmeldenummer: 96119949.4
(22) Anmeldetag: 12.12.1996
(51) Int. Cl.: B60R 19/04, F16B 5/06

(54) **Stossfängerverkleidung aus Kunststoff für Kraftfahrzeuge**
Plastic bumper fascia for motor vehicles
Habillage en plastique pour pare-chocs de véhicules automobiles

(30) Priorität: 13.12.1995 DE 19546478
(43) Veröffentlichungstag der Anmeldung: 18.06.1997
(73) Patentinhaber: DYNAMIT NOBEL AKTIENGESELLSCHAFT, 53840 Troisdorf (DE)
(72) Erfinder: Morcillo, Antonio, 08759 Vallirana (ES)

(56) Entgegenhaltungen:
- DE-C- 4 202 036
- FR-A- 936 551
- PATENT ABSTRACTS OF JAPAN vol. 012, no. 134 (M-689), 23.April 1988 & JP 62 255259 A (NISSAN MOTOR CO LTD), 7.November 1987,

## Beschreibung

Die Erfindung betrifft eine Stoßfängerverkleidung aus Kunststoff für Kraftfahrzeuge.

Stoßfängerverkleidungen aus Kunststoff werden heute nahezu an allen Kraftfahrzeugen angebaut. Sie haben den Vorteil, daß sie extrem leicht sind und einen guten Schutz bieten. Diese Stoßfängerverkleidungen sind einteilig aufgebaut und werden durch Clipse, Schrauben oder dgl. am Kraftfahrzeug bzw. einem Halteelement befestigt.

Nachteilig ist hieran, daß bei einem Unfall oder einer Karambolage, bei der nur ein Teil der Stoßfängerverkleidung eingedrückt oder beschädigt worden ist, immer die gesamte Stoßfängerverkleidung ausgetauscht werden muß.

Der Erfindung liegt die Aufgabe zugrunde, eine Stoßfängerverkleidung aus Kunststoff für Kraftfahrzeuge zu schaffen, die bei einer Karambolage teilweise weiterverwendet werden kann.

Erfindungsgemäß wird diese Aufgabe dadurch gelöst,
- daß die Stoßfängerverkleidung aus zumindest zwei Einzelteilen besteht, die sich jeweils an ihrer vertikalen Verbindungstelle konturenscharf berühren,
- daß die Einzelteile an ihrer Verbindungsstelle nach innen gerichtete Haltelaschen aufweisen,
- daß eine flächenförmige Verbindungsplatte auf der Verbindungsstelle aufliegt und die Haltelaschen umklammert, und
- daß zusätzlich an der Verbindungsplatte senkrecht zur Verbindungsstelle sich erstreckende Haltefinger angeordnet sind, die in entsprechende Halteösen an der Stoßfängerverkleidung eingreifen.

Durch die konturenscharfe Berührungsstelle ist von außen kaum zu erkennen, daß die Stoßfängerverkleidung aus Einzelteilen zusammengesetzt ist.

Die Verbindungsplatte ist so konstruiert, daß sowohl über die Haltelaschen bzw. deren Umklammerung als auch über die Haltefinger in Verbindung mit den Halteösen eine extrem feste und starre Verbindung zweier Einzelteile erreicht ist. Die Verbindungsplatte dient zugleich noch als Verstärkungselement.

In bevorzugter Ausführungsform besteht die Stoßfängerverkleidung aus drei Einzelteilen und zwar aus einem Vorderteil mit 2 Seitenteilen, die bis über die Radkästen reichen.

Bevorzugt sind in der Verbindungsplatte an einer Stirnseite offene Schlitze angeordnet, in die durch Verschieben der Verbindungsplatte die Haltelaschen eingeschoben werden in der Art eines Bajonettverschlusses.

Zum besseren Einrasten sind die Schlitze zweckmäßigerweise konisch geformt.

Damit die Haltelaschen in die Schlitze eingeführt werden können, ist den Schlitzen benachbart in der Verbindungsplatte jeweils ein Raum zur Aufnahme der Haltelaschen vor dem Verschieben in die Schlitze angeordnet. Beim Verschieben der Haltelaschen in die Schlitze werden zugleich die Haltefinger in die Halteösen geschoben.

Zum besseren Halt sind die Enden der Haltefinger vorteilhafterweise verdickt ausgebildet. Daran angepaßt ist natürlich die Größe der Halteösen.

In bevorzugter Ausführungsform weist die Haltelasche eines Einzelteils an der zur anderen Haltelasche des benachbarten Einzelteils gerichteten Seite eine Auskragung auf, die in eine Einschnürung der benachbarten Haltelasche eingreift.

Bevorzugt greifen die Haltelaschen so ineinander, daß im Querschnitt eine t-förmige Lasche gebildet ist.

Zur Stabilitätsverbesserung sind bevorzugt in Längsrichtung der Verbindungsplatte Verstärkungsrippen angeordnet. Unter "Längsrichtung" ist hier die horizontale Ausdehnung der Stoßfängerverkleidung, d.h. seine Länge verstanden.

Bevorzugt sind die Stoßfängerverkleidung und die Verbindungsplatte aus Polypropylen hergestellt.

Weitere Merkmale der Erfindung ergeben sich aus den Figuren, die nachfolgend beschrieben sind.

Es zeigt:
- Fig. 1: den unteren Teil eines PKW's von vorne;
- Fig. 2: einen Ausschnitt gemäß II in Fig. 1, aber von der Rückseite (ohne Verriegelung);
- Fig. 3: einen Schnitt nach der Linie III-III in Fig. 2;
- Fig. 4: dto. mit aufgeschobener Verbindungsplatte;
- Fig. 5: die Verbindungsplatte auf die Einzelteile gemäß Fig. 2 aufgesetzt, aber noch nicht verriegelt;
- Fig. 6: die Verbindungsplatte von der Rückseite;
- Fig. 7: einen Teilschnitt nach der Linie VII-VII in Fig. 5 und
- Fig. 8: dto. aber in der verriegelten Stellung.

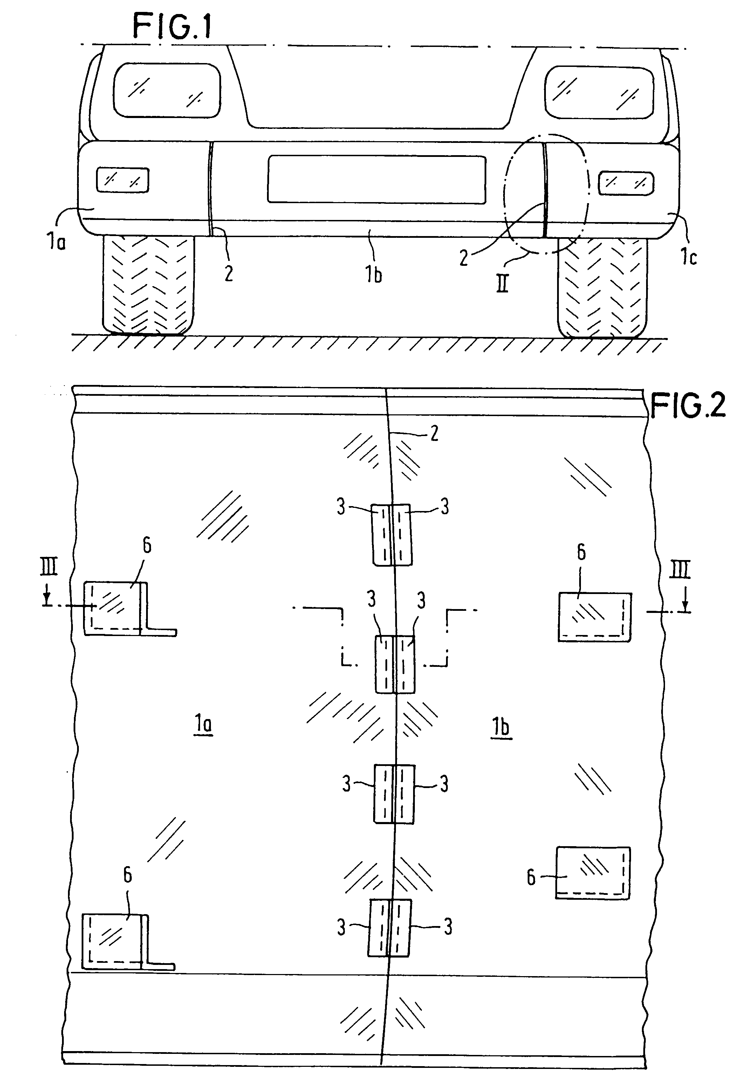

Fig. 1 zeigt den unteren Teil eines Personenkraftwagens von vorne gesehen. Eine Stoßfängerverkleidung bestehend aus den Einzelteilen 1a, 1b, 1c ist über nicht gezeigte Clipse, Schrauben oder dgl. am Kraftfahrzeug bzw. einem entsprechenden Halteelement befestigt. An der Verbindungsstelle 2 berühren sich die Einzelteile 1a, 1b, 1c konturenscharf. Nach einem Unfall braucht nicht mehr die gesamte Stoßfängerverkleidung, sondern nur noch das beschädigte Einzelteil ersetzt zu werden.

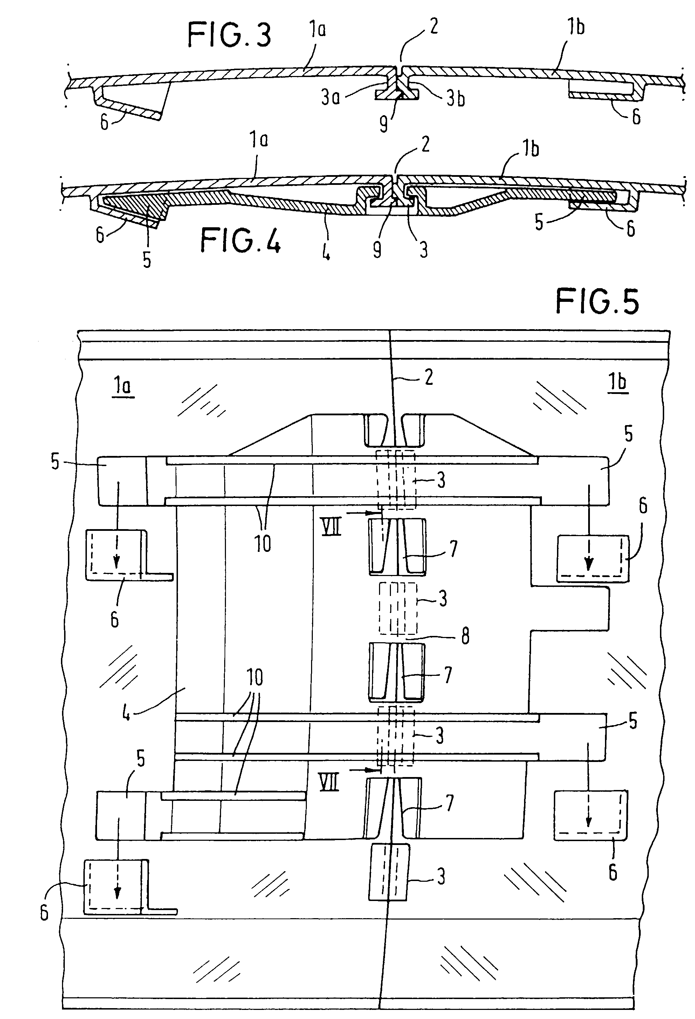

Fig. 2 zeigt einen Ausschnitt gemäß II in Fig. 1, jedoch von der Rückseite und noch ohne Verriegelung durch die später beschriebene Verbindungsplatte. An der Verbindungsstelle 2 weisen die Einzelteile 1a, 1b nach innen gerichtete Haltelaschen 3 auf. Diese ragen etwa rechtwinklig ab und bilden im Querschnitt gesehen ein t-förmiges Gebilde (siehe Fig. 3). Außerdem sind an den Einzelteilen 1a, 1b garagenförmige Halteösen 6 angeordnet.

Fig. 3 zeigt einen Schnitt nach der Linie III-III in Fig. 2. Die Verbindungsstelle 2 zwischen den Einzelteilen 1a, 1b ist hier mit einer geringen Freistellung ausgeführt. Zur besseren Verankerung weist die Haltelasche 3a des Einzelteils 1a eine Auskragung 9 auf, die in eine entsprechende Einschnürung der benachbarten Haltelasche 3b eingreift. Außerdem zeigt auch Fig. 3 gut die Form der Halteösen 6, die auf der linken Seite verdickt ausgebildet sind, wodurch die Festigkeit erhöht ist.

Fig. 4 zeigt denselben Ausschnitt wie Fig. 3 nur mit aufgeschobener Verbindungsplatte 4. Diese Verbindungsplatte 4 umklammert die Haltelaschen 3 und hat senkrecht zur Verbindungsstelle 2 ausgerichtete Haltefinger 5, die in die Halteösen 6 in der Art eines Bajonettverschlusses eingeschoben werden.

Deutlicher ist die Verbindungsplatte 4 in der Fig. 5 gezeigt. Dort ist die Verbindungsplatte 4 auf die Einzelteile 1a, 1b aufgesetzt, aber noch nicht verriegelt. Zur Umklammerung der Haltelaschen 3 sind an der Verbindungsplatte 4 an einer Stirnseite offene Schlitze 7 angeordnet, in die durch Verschieben der Verbindungsplatte 4 die Haltelaschen 3 eingeschoben werden, wie auch schon bei den Haltefingern 5 und den Halteösen 6 in der Art eines Bajonettverschlusses. Zum besseren Halt sind die Schlitze 7 konisch geformt. Damit die Verbindungsplatte 4 auf die Einzelteile 1a, 1b aufgesetzt werden kann, sind den Schlitzen 7 benachbart in der Verbindungsplatte 4 jeweils Räume 8 zur Aufnahme der Haltelaschen 3 vor dem Verschieben in die Schlitze 7 angeordnet.

Zur Stabilitätsverbesserung der Verbindungsplatte 4 weist diese in Längsrichtung Verstärkungsrippen 10 auf.

Vorteilhafterweise sind sowohl die Einzelteile 1a, 1b, 1c als auch die Verbindungsplatte 4 aus Polypropylen (PP) hergestellt.

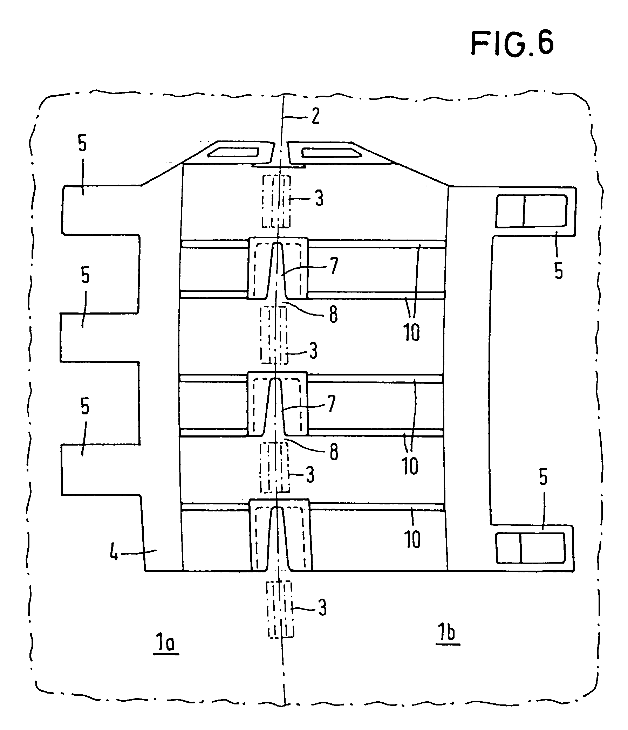

Fig. 6 zeigt die Verbindungsplatte 4 von der bzgl. Fig. 5 anderen Seite. Gut zu erkennen sind die Räume 8, in die die Haltelaschen 3 vor dem Verschieben in die Schlitze 7 eingelegt werden.

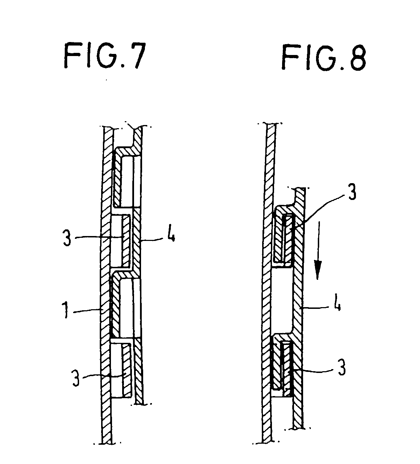

Fig. 7 zeigt einen Teilschnitt nach der Linie VII-VII in Fig. 5 und Fig. 8 denselben Ausschnitt jedoch in der verriegelten Stellung. Es ist gut zu erkennen, wie die Haltelaschen 3 durch Verschieben der Verbindungsplatte 4 festgelegt werden.

## Patentansprüche

1. Stoßfängerverkleidung aus Kunststoff für Kraftfahrzeuge, **dadurch gekennzeichnet,**
- daß die Stoßfängerverkleidung aus zumindest zwei Einzelteilen (1a,1b,1c) besteht, die sich jeweils an ihrer vertikalen Verbindungsstelle (2) konturenscharf berühren,
- daß die Einzelteile (1a,1b,1c) an ihrer Verbindungsstelle (2) nach innen gerichtete Haltelaschen (3) aufweisen,
- daß eine flächenförmige Verbindungsplatte (4) auf der Verbindungsstelle (2) aufliegt und die Haltelaschen (3) umklammert, und
- daß zusätzlich an der Verbindungsplatte (4) senkrecht zur Verbindungsstelle (2) sich erstreckende Haltefinger (5) angeordnet sind, die in entsprechende Halteösen (6) an der Stoßfängerverkleidung eingreifen.

2. Stoßfängerverkleidung nach Anspruch 1, **dadurch gekennzeichnet,** daß an der Verbindungsplatte (4) an einer Stirnseite offene Schlitze (7) angeordnet sind, in die durch Verschieben der Verbindungsplatte (4) die Haltelaschen (3) eingeschoben werden in der Art eines Bajonettverschlusses.

3. Stoßfängerverkleidung nach Anspruch 2, **dadurch gekennzeichnet,** daß die Schlitze (7) konisch geformt sind.

4. Stoßfängerverkleidung nach Anspruch 2 oder 3, **dadurch gekennzeichnet,** daß den Schlitzen (7) benachbart in der Verbindungsplatte (4) jeweils ein Raum (8) zur Aufnahme der Haltelaschen (3) vor dem Verschieben in die Schlitze (7) angeordnet ist.

5. Stoßfängerverkleidung nach einem der Ansprüche 1 bis 4, **dadurch gekennzeichnet,** daß die Haltelasche (3a) eines Einzelteils (1a) an der zur anderen Haltelasche (3b) des benachbarten Einzelteils (1b) gerichteten Seite eine Auskragung (9) aufweist, die in eine Einschnürung der benachbarten Haltelasche (1b) eingreift.

6. Stoßfängerverkleidung nach einem der Ansprüche 1 bis 5, **dadurch gekennzeichnet**, daß die Haltelaschen (3) so ineinandergreifen, daß im Querschnitt eine t-förmige Lasche gebildet wird.

7. Stoßfängerverkleidung nach einem der Ansprüche 1 bis 6, **dadurch gekennzeichnet**, daß die Enden der Haltefinger (5) verdickt ausgebildet sind.

8. Stoßfängerverkleidung nach einem der Ansprüche 1 bis 7, **dadurch gekennzeichnet**, daß in Längsrichtung der Verbindungsplatte (4) Verstärkungsrippen (10) angeordnet sind.

9. Stoßfängerverkleidung nach einem der Ansprüche 1 bis 8, **dadurch gekennzeichnet**, daß die Einzelteile (1a,1b,1c) und die Verbindungsplatte (4) aus Polypropylen hergestellt sind.

## Claims

1. Bumper panelling made of plastics for motor vehicles, characterised
- in that the bumper panelling consists of at least two individual portions (1a, 1b, 1c) which meet with well-defined contours in each case at their vertical junction position (2),
- in that at their junction position (2), the individual portions (1a, 1b, 1c) have inwardlydirected holding clips (3),
- in that a sheet-like connection plate (4) rests on the junction position (2) and clasps the holding clips (3), and
- in that holding fingers (5) extending at right angles to the junction position (2), which holding fingers engage in corresponding holding eyes (6) on the bumper panelling, are additionally arranged on the connection plate (4).

2. Bumper panelling according to claim 1, characterised in that open slits (7) into which, by displacing the connection plate (4), the holding clips (3) are pushed in the manner of a bayonet joint are arranged on the connection plate (4) on one face.

3. Bumper panelling according to claim 2, characterised in that the slots (7) are conical in shape.

4. Bumper panelling according to claim 2 or 3, characterised in that a respective space (8) for receiving the holding clips (3) before the displacement into the slots (7) is arranged in the connection plate (4) adjacent to the slots (7).

5. Bumper panelling according to one of claims 1 to 4, characterised in that the holding clip (3a) of one individual portion (1a) has, on the side facing the other holding clip (3b) of the adjacent individual portion (1b), a projection (9) which engages in a recess in the adjacent holding clip (1b).

6. Bumper panelling according to one of claims 1 to 5, characterised in that the holding clips (3) engage in each other in such a way that a clip which is t-shaped in cross-section is formed.

7. Bumper panelling according to one of claims 1 to 6, characterised in that the ends of the holding fingers (5) are thickened.

8. Bumper panelling according to one of claims 1 to 7, characterised in that reinforcing ribs (10) are arranged in the longitudinal direction of the connection plate (4).

9. Bumper panelling according to one of claims 1 to 8, characterised in that the individual portions (1a, 1b, 1c) and the connection plate (4) are made of polypropylene.

## Revendications

1. Habillage de pare-chocs en matière plastique pour véhicules automobiles, caractérisé par le fait
- que l'habillage de pare-chocs est formé d'au moins deux éléments indépendants (1a, 1b, 1c) qui se touchent à franc-bord au niveau de leur point d'assemblage (2) vertical,
- que les éléments indépendants (1a, 1b, 1c), au niveau de leur point d'assemblage (2), comportent des pattes de fixation (3) tournées vers l'intérieur,
- qu'une plaque de liaison (4) plane est placée sur le point d'assemblage (2) et entoure les pattes de fixation (3) et
- qu'en outre des doigts de fixation (5) s'étendant perpendiculairement au point d'assemblage (2) sont disposés sur la plaque de liaison (4) et pénètrent dans des oeillets (6) correspondants sur l'habillage de pare-chocs.

2. Habillage de pare-chocs selon la revendication 1, caractérisé par le fait que des fentes (7) ouvertes au niveau d'une face frontale, dans lesquelles les pattes de fixation (3) s'engagent par coulissement à la manière d'une fermeture à baïonnette, sont aménagées dans la plaque de liaison (4).

3. Habillage de pare-chocs selon la revendication 2, caractérisé par le fait que les fentes (7) ont une conformation conique.

4. Habillage de pare-chocs selon la revendication 2 ou 3, caractérisé par le fait qu'une chambre (8) destinée à recevoir les pattes de fixation (3) avant leur coulissement dans les fentes (7) sont aménagées dans la plaque de liaison (4), dans le voisinage de chacune des fentes (7).

5. Habillage de pare-chocs selon une des revendications 1 à 4, caractérisé par le fait que la patte de fixation (3a) d'un élément (1a), du côté tourné vers l'autre patte de fixation (3b) appartenant à l'élément (1b) voisin comporte une saillie (9) qui s'engage dans un évidement de la patte de fixation voisine (1b).

6. Habillage de pare-chocs selon une des revendications 1 à 5, caractérisé par le fait que les pattes de fixation (3) pénètrent l'une dans l'autre et forment une patte à section droite en forme de T.

7. Habillage de pare-chocs selon une des revendications 1 à 6, caractérisé par le fait que les extrémités des doigts de fixation (5) comportent un renflement.

8. Habillage de pare-chocs selon une des revendications 1 à 7, caractérisé par le fait que des nervures de renfort (10) sont disposées dans la direction longitudinale de la plaque de liaison (4).

9. Habillage de pare-chocs selon une des revendications 1 à 8, caractérisé par le fait que les éléments indépensants (1a, 1b, 1c) et la plaque de liaison (4) sont en polypropylène.
